# EUROPEAN PATENT SPECIFICATION

(11) **EP 2 702 862 B1**
(45) Date of publication and mention of the grant of the patent: **28.10.2015**
(21) Application number: 12182789.3
(22) Date of filing: 03.09.2012
(51) Int. Cl.: A01G 1/00, A01G 7/00, A01G 17/00

(54) **Method for cultivation of plants of the Jatropha genus**
Verfahren zum Anbau von Pflanzen des Jatropha genus
Méthode pour cultiver des plantes du genus Jatropha

(43) Date of publication of application: 05.03.2014
(73) Proprietor: Bertola Central Docks S.R.L., 20010 Ossona (MI) (IT)
(72) Inventor: Bertola, Maurizio, 20010 Ossona (MI) (IT)
(74) Representative: Zardi, Marco

(56) References cited:
- WO-A2-2009/081416
- CN-A- 101 194 585
- US-A- 4 985 062
- US-A- 5 021 350

## Description

### Field of the invention

The invention relates to a method for cultivation of plants of the *Jatropha* genus and in particular the *Jatropha Curcas* species for the production of fuel oil, biomass and bio-pellets.

### Prior Art

The *Jatropha Curcas* (referred to below simply as *Jatropha*) is a wild plant which grows in arid or near-desert terrain and is widespread mainly in the equatorial, tropical and subtropical latitudes. It is known to be a toxic plant, but constitutes an important source for the production of fuel oil and in particular bio-fuels. The seeds in fact contain an oil which can be used as fuel following pressing and simple filtration, or may be used to produce biodiesel.

The cultivation of *Jatropha* for energy purposes is the focus of great interest, on account of the resistance of the plant, its capacity to grow in arid zones and its need for little attention. It constitutes a promising resource for the reduction of carbon dioxide emissions in the atmosphere.

The current cultivation techniques, however, have hitherto proved to be not very satisfactory. The conventional techniques are based substantially on the seasonal growth cycle of the plant, but this results in only one harvest per year, corresponding to a yield of about 2 tons of oil per hectare. The plant in fact is adapted to desert climates and is fruit-bearing only in the rainy season (about 3 months per year); for the remainder of the year it loses its leaves and does not produce any fruit.

Attempts have been made to increase the yield by means of continuous watering, but this has produced disappointing results. In fact, continuous watering involves high costs, making production uneconomical; it diverts water away from other uses, such as crops for alimentary use; it does not achieve the expected result owing to the nature of the terrain in the zones where this type of crop is grown, which is arid and draining and does not retain the water. It must also be considered that, in semi-desert areas such as the savanna, often in poor countries where water is a scarce and extremely precious commodity for man, the allocation of huge quantities of water for energy crops conflicts with evident considerations of an ethical nature.

Another disadvantage of the conventional techniques consists in the time period occurring between the start of cultivation and fruit yield (and hence oil production). At present this time period is about three years and results in an unattractive investment because obviously the creation of a crop requires a certain outlay, but the initial returns materialise after a long time.

Despite all the above, *Jatropha* remains one of the plants considered to be most interesting for the production of fuel oil from plant sources. There is therefore a great incentive to increase the productivity of *Jatropha,* especially with the cultivation in arid or near-desert terrains, such as the savanna, where energy crops do not compete with agricultural crops. The prior art has not yet found a satisfactory solution for this need.

WO-A2-2009/081416 discloses the cultivation of cuttings of plants of the Jatropha germs, while CN-A-101 194 585 discloses the treatment of seeds of plants of the Jatropha germs with mycorrhizal fungi.

### Summary of the invention

The present invention proposes providing a method for cultivation of plants of the *Jatropha* genus, able to achieve a production which is higher and available in a shorter time following planting, compared to the methods used hitherto.

The invention, more particularly, uses the technique of reproduction by means of cuttings. The idea forming the basis of the invention is that the cuttings are planted out using a gel able to provide the plant with a constant water supply without the need for external irrigation. Said gel is formed by an absorbent polymer and water and is mixed with mycorrhizal fungi in order to speed up the growth of the roots.

The polymer is advantageously a superabsorbent polymer. These polymers are indicated by the abbreviation SAP; for example it is possible to use an acrylamide and potassium acrylate copolymer and more advantageously a cross-linked polymer.

The mycorrhizal fungi preferably belong to the *Glomus* genus.

According to another aspect of the invention, before planting out, the cuttings are prepared in a special nursery where the cuttings are placed in soft plastic bags (also known as "polybags") which contain a compost of soil and sand and suitable nitrogen and phosphorus sources. Preferably the compost contains cow dung and poultry droppings. The dung in particular provides the plant with nitrogen, while the poultry droppings provide phosphorus.

The cuttings are taken from female plants. Transplantation externally (e.g. in the savanna) may take place for example 45 days after planting of the cuttings in the polybags. For manuring, advantageously a nitrogenous fertilizer (e.g. urea) will be used.

The advantages of the invention are as follows: it has been observed that, with this method, *Jatropha* is productive from the first year and is able to provide more than one harvest per year, for example three harvests per year, with an oil production markedly superior to that of the methods of the prior art. For example, with the invention it is possible to achieve about 6 tons of oil per hectare of cultivated surface area, compared to about 2 tons/hectare of the prior art.

The invention allows the cultivation of *Jatropha Curcas,* and the production of oil, in semi-desert terrain such as the savanna, without wasting water using conventional irrigation procedures, owing to the use of gel (also called hydrogel) which slowly releases, over time, the water required by the plant. In this way the use of precious resources, such as water and nutrients, may be optimized; moreover terrain which otherwise would not be productive, and in particular would not be of any interest for agricultural crops destined for human alimentation, may be used. For these reasons, the cultivation of *Jatropha Curcas* for energy purposes (especially for biofuels) is much more attractive from an economic point of view.

### Example

A cultivation method according to one of the modes of implementation of the invention, for example, starts with the preparation of the cuttings in a nursery. A soil/sand compost is prepared, mixing in cow dung and poultry droppings, preferably in the following proportions: 50% soil and sand, 30% cow dung and 20% poultry droppings. This compost has proved to be ideal for the growth of the plant during the initial phase.

The structured compost is inserted inside a container (polybag) which consists advantageously of a soft plastic cylinder, preferably with the dimensions 25 cm height x 4 cm width, suitably perforated to allow drainage of the excess water.

A few small branches are cut off from adult female plants which are in the flower and fruit production phase. The maximum length of the cut-off branches is advantageously 30 cm. The branches may be removed directly from the crops present in loco.

Each of the branches removed is inserted inside the respective polybag thus creating the cutting. For example, a 30 cm branch will be inserted to a depth of about 10 cm. Advantageously, the cuttings are arranged in orderly rows so as to be able to verify easily the percentage rooting success. The applicant has recorded a very high percentage of about 98%.

In order to achieve a high rooting percentage preferably the foliage of the cutting is removed only along the portion which will be placed inside the polybag, while the leaves will be left on the remaining part. This measure prevents any ripping of the leaf stalk from damaging the leaf bud which will generate the new leaf once the cutting has rooted. It is preferable then to allow drying of the old leaf on the cutting since within a short space of time a new green leaf will emerge from the leaf bud situated at the intersection between branch and the old leaf which has now dropped off.

The process of watering the cuttings planted in the polybags preferably consists of an irrigation cycle which is divided into two parts and during which the cuttings must be watered abundantly in order to keep the compost inside the polybag moist. Irrigation should preferably be performed in the morning and in the evening, avoiding wetting the plants during the day, when the water evaporates rapidly and watering is less effective.

Transplantation externally (for example in the savanna) may take place 45 days after planting of the cutting in the polybag, resulting in the immediate yield of the first 8-10 fruits accompanied, at the top, by the flowers which will give rise to a further yield. This phenomenon occurs since the cutting used in the transplant has already acquired the DNA of the mother plant and is therefore already predisposed for immediate flowering and the corresponding production of fruit.

The operation of planting out the cutting consists in the creation of a hole, the bottom of which is filled with 1 litre of water and with an absorbent polymer. This product is mixed with water in a proportion of 7 kg per 1000 litres of water, creating a gelatinous paste. The paste is placed on the bottom of the hole before planting of the plant and ensures that the latter has a water reserve for about one month. Once this period has passed by, it is sufficient to regenerate the gel by adding water. It should be noted that, in this way, a suitable but limited use of water is ensured, avoiding waste.

A mycorrhizal fungus, suitable for favouring the growth of the root system, is also added. The product Symbivit®, for example, may be used for this purpose in an amount equivalent to 1 kg for every 1000 litres of water.

After harvesting of the first fruits already present on the cutting transplanted externally, the plant is pruned again about 2 months after planting, thus favouring the branch growth of the plant itself. In this way the plant will produce several branches which will all bear fruit.

It is preferable to use a fertilizer with 46% nitrogen content in an amount of about 20-30 cm³ for each plant. The applicant has found that, by adopting this procedure, the plant grows rapidly within the space of two months, from a few centimetres to 70-80 cm, developing different branches and a large number of fruits (e.g. about 40-50) with above them, at the end of each branch, flowers which in turn will produce further fruit. In addition to harvesting, by pruning the plant further, it is possible to create new cuttings and restore the production cycle, resulting in a new harvest after only 4 months.

It can therefore be understood that with the method according to the invention it is possible to obtain, within the space of one year, the production of an amount of oil which is obtained after 3 or 4 years with conventional techniques. The applicant has also found that the quality of the oil produced is equivalent to that of the oil obtained from plants cultivated according to the prior art, namely the production is increased without detriment to the quality of the oil.

## Claims

1. Method for cultivation of a plant of the *Jatropha* genus, in particular the *Jatropha Curcas* species, with reproduction of the plant by means of cuttings, said method being **characterized by** planting out the cuttings using a gel formed by an absorbent polymer and water, said gel being moreover mixed with mycorrhizal fungi.

2. Method according to Claim 1, said polymer being a superabsorbent polymer (SAP).

3. Method according to Claim 2, said polymer being a copolymer of acrylamide and potassium acrylate.

4. Method according to any one of the preceding claims, wherein the mycorrhizal fungi belong to the *Glomus* genus.

5. Method according to any one of the preceding claims, wherein the cuttings, before planting out, are prepared in soft plastic bags containing a soil and sand compost comprising at least one nitrogen source and at least one phosphorus source.

6. Method according to Claim 5, wherein the compost comprises cow dung and poultry droppings.

7. Method according to Claim 6, wherein said compost is formed by about 50% soil and sand, about 30% dung and about 20% poultry droppings.

8. Method according to any one of the preceding claims, wherein the cuttings have a maximum length of about 30 cm.

## Patentansprüche

1. Verfahren zur Kultivierung einer Pflanze der Gattung *Jatropha*, insbesondere der Art *Jatropha Curcas,* mit der Reproduktion der Pflanze durch Stecklinge, wobei das Verfahren charakterisiert ist durch Aussetzen der Stecklinge unter Verwendung eines Gels, das durch ein absorbierendes Polymer und Wasser gebildet ist, wobei das Gel darüber hinaus mit Mykorrhiza-Pilzen gemischt ist.

2. Verfahren nach Anspruch 1, wobei das Polymer ein superabsorbierendes Polymer (SAP) ist.

3. Verfahren nach Anspruch 2, wobei das Polymer ein Copolymer aus Acrylamid und Kaliumacrylat ist.

4. Verfahren nach einem der vorherigen Ansprüche, wobei die Mykorrhiza-Pilze zu der Gattung *Glomus* angehören.

5. Verfahren nach einem der vorherigen Ansprüche, wobei die Stecklinge vor dem Aussetzen in weichen Kunststoffbeuteln vorbereitet werden, die Erde- und Sandkompost enthalten, umfassend mindestens eine Stickstoffquelle und mindestens eine Phosphorquelle.

6. Verfahren nach Anspruch 5, wobei der Kompost Kuhdung und Geflügelkot umfasst.

7. Verfahren nach Anspruch 6, wobei der Kompost durch etwa 50 % Erde und Sand, etwa 30 % Dung und etwa 20 % Geflügelkot gebildet wird.

8. Verfahren nach einem der vorherigen Ansprüche, wobei die Stecklinge eine maximale Länge von etwa 30 cm haben.

## Revendications

1. Méthode de culture d'une plante du genre *Jatropha,* en particulier l'espèce *Jatropha curcas,* avec reproduction de la plante par bouturage, la dite Méthode étant **caractérisée par** la Transplantation des boutures en utilisant un gel formé d'un polymère absorbant et d'eau, le dit gel étant en outre mélangé à des champignons mycorhiziens.

2. Méthode selon la revendication 1, **caractérisée en ce que** le dit polymère est un polymère super-absorbant (SAP).

3. Méthode selon la revendication 2, **caractérisée en ce que** le dit polymère est un copolymère d'acrylamide et d'acrylate de potassium.

4. Méthode selon l'une quelconque des revendications précédentes, **caractérisée en ce que** le champignon mycorhizien appartient au genre *Glomus.*

5. Méthode selon l'une quelconque des revendications précédentes, **caractérisée en ce que** les boutures, avant d'être transplantées, sont préparées dans des sacs de plastique souple contenant un compost de terre et de sable comprenant au moins une source d'azote et au moins une source de phosphore.

6. Méthode selon la revendication 5, **caractérisée en ce que** le compost comprend de la bouse de vache et des fientes de volaille.

7. Méthode selon la revendication 6, **caractérisée en ce que** le dit compost est formé d'environ 50% de terre et de sable, d'environ 30% de bouse de vache et d'environ 20% de fientes de volaille.

8. Méthode selon l'une quelconque des revendications précédentes, **caractérisée en ce que** les boutures ont une longueur maximale d'environ 30 cm.
